# EUROPÄISCHE PATENTANMELDUNG

(11) **EP 2 594 143 A1**
(43) Veröffentlichungstag der Anmeldung: **22.05.2013**
(21) Anmeldenummer: 11189238.6
(22) Anmeldetag: 15.11.2011
(51) Int. Cl.: A23L 1/20, A23L 1/212, A23L 1/216, A23L 1/221, A23L 1/24

(54) **Gemüseaufstrich**

(71) Anmelder: Wolperdinger, Robert, 85375 Neufahm (DE)
(72) Erfinder: Wolperdinger, Robert, 85375 Neufahm (DE)
(74) Vertreter: Dilg, Haeusler, Schindelmann Patentanwaltsgesellschaft mbH

(57) **Zusammenfassung**

Es wird ein Gemüseaufstrich mit 35 bis 65 Massenprozent eines Gemüses, 1 bis 20 Massenprozent Essig sowie Zucker und Geliermittel geschaffen. Insbesondere kann als Essig Balsamico-Essig verwendet werden. Optional kann auch Wasser als Bestandteil des Gemüseaufstrichs vorgesehen sein.

## Beschreibung

### Gebiet der Erfindung

Die Erfindung betrifft einen Gemüseaufstrich, insbesondere einen zuckerhaltigen Gemüsebrotaufstrich, und ein Verfahren zum Herstellen desselben.

### Hintergrund

Im Lebensmittelbereich ist eine Vielzahl von zuckerhaltigen Brotaufstrichen bekannt. Hierunter fallen beispielsweise gelierte Brotaufstriche wie Marmeladen, Konfitüren und Gelees. Ferner sind zuckerhaltige Brotaufstriche bekannt, welche nicht geliert sind, wie zum Beispiel Honig oder Nuss-Nougat-Cremes.

Insgesamt ist somit eine Vielzahl von unterschiedlichen Geschmacksrichtungen von Brotaufstrichen bekannt.

### Kurzdarstellung der Erfindung

Trotz der beschriebenen Vielfalt an Geschmacksrichtungen mag es einen Wunsch nach neuen abwechslungsreicheren Geschmacksrichtungen für Brotaufstriche geben.

Dieser Wunsch mag durch einen Gemüseaufstrich und einem Verfahren zum Herstellen desselben gemäß den unabhängigen Patentansprüchen erfüllt werden. Exemplarische Ausführungsbeispiele werden in den abhängigen Patentansprüchen angegeben.

Gemäß einem exemplarischen Aspekt weist ein Gemüseaufstrich 35 bis 65 Massenprozent eines Gemüses, 1 bis 20 Massenprozent Essig sowie Zucker und Geliermittel auf. Insbesondere kann Balsamico-Essig verwendet werden. Optional kann auch Wasser als Bestandteil des Gemüseaufstrichs vorgesehen sein.

Gemäß einem exemplarischen Aspekt weist ein Verfahren zum Herstellen eines Gemüseaufstrichs ein Zubereiten eines Gemüsemuses, ein Mischen des Gemüsemuses mit Essig und Zucker zum Erzeugen einer Grundmasse des Gemüseaufstrichs, ein Hinzufügen eines Geliermittels und ein Erhitzen der mit dem Geliermittel versetzten Grundmasse auf. Optional kann auch Wasser hinzugefügt werden, beispielsweise kann Wasser verwendet werden, um einzelne Komponenten, z.B. Zucker und/oder das Geliermittel, aufzulösen, bevor diese hinzugefügt werden.

Insbesondere kann das Mischen und/oder das Hinzufügen des Geliermittels unter Rühren stattfinden. Beispielsweise kann das Gemüsemus gerührt werden, während der Zucker und/oder der Essig und/oder optional Muskatnuss hinzugefügt werden. Ferner ist zu bemerken, dass die Reihenfolge, in der die einzelnen Komponenten bei der Herstellung der Grundmuses hinzugefügt nicht wesentlich sind. Beispielsweise mag der Zucker vor oder nach dem Hinzufügen des Essigs und/oder eines optionalen Muskatnussanteils hinzugefügt werden. Es ist auch möglich, dass der Zucker in Teilmengen hinzugefügt wird, d.h. beispielsweise zuerst eine erste Teilmenge des Zuckers, anschließend der Essig und/oder der optionale Muskatnussanteil und anschließend eine zweite Teilmenge des Zuckers. Auch ist es möglich, dass das Gemüsemus in den Zucker oder dass der Zucker in das Gemüsemus eingerührt wird. Insbesondere ist zu beachten, dass der Begriff Gemüsemus sowohl eine homogene Masse als auch eine inhomogene Masse, welche beispielsweise noch Stücke des verwendeten Gemüses aufweist, einschließt.

Der Begriff "Gemüseaufstrich" mag insbesondere bedeuten, dass die größte bzw. zumindest eine Hauptkomponente oder Zutat des Gemüseaufstrichs eine Gemüseart oder eine Mischung mehrerer Gemüsearten ist und dass dieser als Aufstrich, beispielsweise als Brotaufstrich geeignet ist. Jedoch kann ein solcher Gemüseaufstrich selbstverständlich auch in anderer Art und Weise beispielsweise bei der Herstellung von Kuchen, Keksen, feine Backwaren oder Konditoreiwaren verwendet werden.

Unter dem Begriff "Gemüse" mögen insbesondere alle Arten von essbaren Pflanzen oder Pflanzenteile fallen, welche kein Obst und/oder keine Nüsse sind.

Der Zucker und das Geliermittel mögen auch zusammen als Gelierzucker bezeichnet werden, bzw. als vorgemischte Mischung vorliegen, welcher zusätzlich optional auch ein Säuerungsmittel wie Zitronensäure und/oder Weinsäure aufweisen kann. Beispiele für den verwendbaren Zucker mögen Glucose, Fructose, Dextrose oder eine Mischung derselben, beispielsweise Invertzucker sein.

Optional mögen in dem Gemüseaufstrich auch noch Konservierungsmittel, wie beispielsweise Sorbinsäure bzw. Sorbate, Benzoesäure bzw. Benzoate und/oder Acetate, vorhanden sein.

Ein Gemüseaufstrich gemäß einem exemplarischen Aspekt mag den Vorteil haben, dass der Gesamtzuckeranteil besser einstellbar ist als bei Obstkonfitüren. Insbesondere weist Gemüse im Allgemeinen einen geringeren Eigenanteil an Zucker als Ost auf. Somit können auch die Schwankungen des Eigenanteils an Zucker geringer sein. Der Gesamtzuckeranteil des Gemüseaufstrichs wird im Wesentlichen durch die Beimengung des Zuckers gehandhabt. Ferner mag die Verwendung von Essig neben einem geschmacklichen Effekt auch einen konservierenden Effekt bewirken, da dieser zu einer Änderung des PH-Wertes führen kann, was eine Hemmung des Wachstums von Hefen und Bakterien bewirken kann. Weiterhin kann der Essig auch eine Gelierwirkung des Geliermittels steigern bzw. das Gelieren des Geliermittels bewirken. Ferner kann es möglich sein, mittels eines zuckerhaltigen Gemüseaufstrichs gemäß einem exemplarischen Aspekt neuartige Geschmacksrichtungen zu ermöglichen, wobei der Gemüseaufstrich insbesondere gleichzeitig eine gute Streichfähigkeit aufweisen kann. Insgesamt kann das Verfahren zum Herstellen eines Gemüseaufstrichs gemäß einem exemplarischen Aspekt es somit ermöglichen einen Gemüseaufstrich herzustellen, der neuartige Geschmacksrichtungen für zuckerhaltige Aufstriche mit einer guten Streichfähigkeit kombiniert.

Im Folgenden werden exemplarische Ausführungsbeispiele des Gemüseaufstrichs beschrieben. Die entsprechenden Ausgestaltungen gelten jedoch auch für das Verfahren zum Herstellen eines Gemüseaufstrichs.

Gemäß einem exemplarischen Ausführungsbeispiel des Gemüseaufstrichs weist der Gemüseaufstrich zusätzlich Muskatnuss auf. Die Muskatnuss kann als Muskatnuss oder als Muskatnussöl zugesetzt werden. Insbesondere mag ein Massenanteil von Muskatnuss oder Muskatnussöl zwischen 0,05 und 10 Massenprozent sein. Optional mag die Muskatnuss oder das Muskatnussöl nur in Spuren vorhanden sein, welche einem Masseanteil von weniger als 0,05 Massenprozent entsprechen oder in einem Anteil bei dem sichergestellt werden kann, dass keine berauschende Wirkungen auftreten. Beispielsweise mag der Massenanteil zwischen 0,05 und 5 Massenprozent, zwischen 0,1 und 10 Massenprozent oder zwischen 0,1 und 5 Massenprozent sein. Bevorzugt mag der Massenanteil zwischen 1,0 und 10 Massenprozent, zwischen 1,0 und 5 Massenprozent, zwischen oder zwischen 0,1 und 2,5 Massenprozent sein. Alle Angaben mögen sich auf Muskatnuss oder Muskatnussöl beziehen.

Insbesondere kann die Verwendung des Essigs zusammen mit einen optionalen Muskatnussanteil ermöglichen, dass eine Vielzahl von Gemüsearten als Brotaufstrich verwendet werden können, welche vorher nicht zu einem zuckerhaltigen Brotaufstrich verarbeitet werden konnten, da sich durch deren Kombination mit dem Zucker neue interessante Geschmacksrichtungen erzeugen lassen.

Gemäß einem exemplarischen Ausführungsbeispiel des Gemüseaufstrichs liegt der Massenanteil des Gemüses zwischen 45 und 55 Massenprozent und/oder der Massenanteil des Gelierzuckers zwischen 25 und 40 Massenprozent und /oder der Massenanteil des Essigs zwischen 1 und 15 Massenprozent.

Gemäß einem exemplarischen Ausführungsbeispiel des Gemüseaufstrichs weist dieser ferner 1 bis 15 Massenprozent Chili und/oder 1 bis 15 Massenprozent Pfeffer auf. Insbesondere kann der Massenanteil des Chilis zwischen 1 und 10 Massenprozent und/oder der Massenanteil des Pfeffers zwischen 1 und 10 Massenprozent liegen.

Gemäß einem exemplarischen Ausführungsbeispiel des Gemüseaufstrichs ist das Gemüse Wurzelgemüse und/oder Blattgemüse und/oder Fruchtgemüse und/oder Sprossengemüse und/oder Zwiebelgemüse und/oder Hülsengemüse und/oder Kohlgemüse.

Beispiele für Fruchtgemüse mögen insbesondere alle Arten von Paprikagewächsen, wie Gelber, Roter oder Grüner Paprika, Peperoni oder Sivri (türkischer Paprika), Tomatengewächse oder Kürbisgewächse wie Hokkaidokürbis sein. Beispiele für Wurzelgemüse mögen Karotten, Mohrrüben, Rettich oder Sellerie sein. Ein Beispiel für Blattgemüse kann insbesondere Spargel sein.

Gemäß einem exemplarischen Ausführungsbeispiel des Gemüseaufstrichs weist das Geliermittel Pektine und/oder Carrageene und/oder Agar-Agar und/oder Alginsäure und/oder Natriumalginat auf.

Insbesondere kann das Geliermittel eine einzige Komponente, beispielsweise ein Pektin, eine Mischung von verschiedenen Pektinen oder eine Mischung von Pektinen und einem anderen Geliermittel wie beispielsweise Natriumalginat aufweisen bzw. aus einem einzelnen Pektin oder einer Mischung bestehen.

Im Folgenden werden exemplarische Ausführungsbeispiele des Verfahrens zum Herstellen eines Gemüseaufstrichs beschrieben. Die entsprechenden Ausgestaltungen gelten jedoch auch für den Gemüseaufstrich.

Gemäß einem exemplarischen Ausführungsbeispiel des Verfahrens wird beim Erzeugen des Grundmuses Chili und/oder Pfeffer hinzugefügt.

Gemäß einem exemplarischen Ausführungsbeispiel des Verfahrens wird das Geliermittel vor dem Hinzufügen mit Zucker vermischt. Beispielweise kann das Geliermittel mit Glucose, Invertzucker und/oder einer Zuckerlösung, z.B. einer Zucker-Wasserlösung, vermischt werden.

### Detaillierte Beschreibung exemplarischer Ausführungsbeispiele

Im Folgenden werden einige exemplarische Beispiele für die Komponenten eines Gemüseaufstrichs beschrieben, wobei alle Angaben in Massenprozent gegeben sind.

### Beispiel 1:

Paprika (Gelber, Roter oder Grüner oder eine Mischung) 45%-55%, Gelierzucker (Mischung aus Zucker, Pektinen und Zitronensäure) 25%-40%, Balsamico-Essig 1%-15%,
Chili 1%-10%,
Pfeffer 1%-10% und
Muskatnuss 1%-10%.

### Beispiel 2

Tomaten 45%-55%,
Gelierzucker (Mischung aus Zucker, Pektinen und Zitronensäure) 25%-40%, Balsamico-Essig 1%-15%,
Chili 1%-10%,
Pfeffer 1%-10% und
Muskatnuss 1%-10%.

### Beispiel 3

Sivri-Kürbis 45%-55%,
Gelierzucker (Mischung aus Zucker, Pektinen und Zitronensäure) 25%-40%, Balsamico-Essig 1%-15%,
Chili 1%-10%,
Pfeffer 1%-10% und
Muskatnuss 1%-10%.

### Beispiel 4

Karotten 45%-55%,
Gelierzucker (Mischung aus Zucker, Pektinen und Zitronensäure) 25%-40%, Balsamico-Essig 1%-15%,
Chili 1%-10%,
Pfeffer 1%-10% und
Muskatnuss 1%-10%.

### Beispiel 5

Rettich 45%-55%,
Gelierzucker (Mischung aus Zucker, Pektinen und Zitronensäure) 25%-40%, Balsamico-Essig 1%-15%,
Chili 1%-10%,
Pfeffer 1%-10% und
Muskatnuss 1%-10%.

### Beispiel 6

Sellerie 45%-55%,
Gelierzucker (Mischung aus Zucker, Pektinen und Zitronensäure) 25%-40%, Balsamico-Essig 1%-15%,
Chili 1%-10%,
Pfeffer 1%-10% und
Muskatnuss 1%-10%.

### Beispiel 7

Spargel 45%-55%,
Gelierzucker (Mischung aus Zucker, Pektinen und Zitronensäure) 25%-40%, Balsamico-Essig 1%-15%,
Chili 1%-10%,
Pfeffer 1%-10% und
Muskatnuss 1%-10%.

### Beispiel 8

Hokkaido-Kürbis 45%-55%,
Gelierzucker (Mischung aus Zucker, Pektinen und Zitronensäure) 25%-40%, Balsamico-Essig 1%-15%,
Chili 1%-10%,
Pfeffer 1%-10% und
Muskatnuss 1%-10%.

### Beispiel 9

Peperoni 45%-55%,
Gelierzucker (Mischung aus Zucker, Pektinen und Zitronensäure) 25%-40%, Balsamico-Essig 1%-15%,
Chili 1%-10%,
Pfeffer 1%-10% und
Muskatnuss 1%-10%.

Im Folgenden wird ein exemplarisches Ausführungsbeispiel für ein Herstellverfahren eines Gemüseaufstrichs insbesondere eines Gemüsebrotaufstrichs beschrieben. Jedoch ist zu beachten, dass dieses Verfahren nicht einschränkend auszulegen ist, sondern im Prinzip jedes bekannte Verfahren zur Herstellung von Marmeladen, Konfitüren bzw. Gelees verwendet werden kann, um einen Gemüseaufstrich gemäß einem exemplarischen Aspekt herzustellen.

In einem Prozesstank, beispielsweise einem Edelstahltank, wird Gemüse, beispielsweise gelbe Paprika, in gestückelter Form oder ungestückelt und eine erste Teilmenge Zucker eingebracht. Insbesondere mögen unter den Begriff "Gemüse" essbare Pflanzen bzw. Pflanzenteile fallen, welche keine Früchte von mehrjährigen Pflanzen sind. Das Gemüse kann entweder bereits als Brei vorliegen oder erst im Prozesstank zu einem feinen oder auch groben Brei verarbeitet werden. Beispielsweise kann dies durch Rühren oder Mixen geschehen. Optional kann, je nach gewünschter Konsistenz des Gemüseaufstrichs, Wasser hinzugefügt werden. Nachfolgend wird die Masse aus Zucker und Paprika unter Rühren erhitzt jedoch nicht gekocht. Die Erhitzung kann elektrisch oder mittels Dampfs erfolgen. Ferner wird Muskatnuss als weiterer Geschmacksträger beigefügt. Optional können vor dem Erhitzen noch Chili und/oder Pfeffer beigemengt werden. Die Erhitzungs-oder Wärmphase dient insbesondere dem Zweck, dass die Geschmacksstoffe aus dem Gemüse, beispielsweise dem Paprika in den Zucker, bzw. die Grundmasse oder Gemüsemus übergehen. Zu diesem Zweck wird die erwärmte Masse unter optionalem Rühren eine vorgegebene Zeitspanne stehengelassen.

Im Falle dass der fertige Gemüseaufstrich eine inhomogene Konsistenz aufweisen soll, d.h. noch Stücke des Gemüses vorhanden sein sollen, muss darauf geachtet werden, dass bei der Herstellung der Gemüsemuses die Gemüsestücke nicht vollständig zu einem homogenen Mus verarbeitet werden. Gegebenenfalls können die Gemüsestücke auch stabilisiert werden, beispielsweise mittels Kalziums und/oder Enzymen.

Nach oder gegebenenfalls auch bereits vor der Beendigung der Standzeit wird ein Geliermittel, beispielsweise Pektine zugegeben. Diese können in Form eines Gelierzuckers, d.h. einer Mischung aus Zucker und Geliermittel und optionalem Säuerungsmittel, beispielsweise Zitronensäure, oder auch als eine Lösung in einem Invertzucker, wiederum mit einem optionalen Säuerungsmittel, zugegeben werden.

Hierbei ist zu beachten, dass das Geliermittel zugefügt wird, während die Temperatur noch unterhalb der Geliertemperatur des entsprechenden Geliermittels liegt, da der Geliervorgang erst einsetzen sollte, wenn das gesamte Geliermittel zugesetzt ist. Nachdem das gesamte Geliermittel zugefügt ist, wird die Grundmasse vorzugsweise nochmals gemischt. Der Geliervorgang kann dann durch die Erhöhung der Temperatur über die Geliertemperatur des Geliermittels und/oder, je nach Geliermittel, durch Hinzufügen von Essig, beispielsweise Balsamico-Essigs, initiiert. Im Falle dass der Geliervorgang mittels Erhöhung der Temperatur und nicht mittels Essigs ausgelöst wird, wird der Essig vorzugsweise bereits vor dem Geliermittel hinzugefügt, so dass er sich gleichmäßiger in der Masse verteilen kann.

Nach Einsetzen des Gelierens wird die Temperatur optional auf eine Temperatur knapp unterhalb von 100°C erhöht, um den Quellvorgang des Geliermittels zu beschleunigen und/oder eine Haltbarkeitserhöhung durch Erhitzen zu erreichen.

Anschließend wird die Masse im Prozesstank langsam unter langsamem Rühren abgekühlt. Im Falle dass vor dem Gelieren kein Säuerungsmittel zugefügt wurde, kann dieses auch während des Abkühlvorgangs noch zugeführt werden. Hierzu kann beispielsweise Zitronensäure und/oder auch der Essig erst zu dem jetzigen Zeitpunkt hinzugefügt werden. Während des Abkühlvorgangs können auch Proben entnommen werden, um den hergestellten Gemüseaufstrich in Hinblick auf Konsistenz, Aussehen, Geschmack und/oder physikalische bzw. chemische Parameter (z.B. PH-Wert) zu untersuchen und gegebenenfalls noch zu modifizieren.

Anschließend kann der Gemüseaufstrich dann aus dem Prozesstank entnommen, beispielsweise gepumpt, und portioniert werden.

Ergänzend ist darauf hinzuweisen, dass "aufweisen" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können.

## Patentansprüche

1. Gemüseaufstrich, welcher aufweist:
35 bis 65 Massenprozent eines Gemüses;
0,5 bis 20 Massenprozent Essig;
Zucker und
Geliermittel.

2. Gemüseaufstrich gemäß Anspruch 1, welcher ferner Muskatnuss aufweist, insbesondere kann ein Anteil an Muskatnuss zwischen 0,05 und 10 Massenprozent liegen.

3. Gemüseaufstrich gemäß einem der Ansprüche 1 bis 2, wobei der Massenanteil des Gemüses zwischen 45 und 55 Massenprozent und/oder der Massenanteil des Gelierzuckers zwischen 25 und 40 Massenprozent und /oder der Massenanteil des Essigs zwischen 1 und 15 Massenprozent liegt.

4. Gemüseaufstrich gemäß einem der Ansprüche 1 bis 3, welcher ferner 1 bis 15 Massenprozent Chili und/oder 1 bis 15 Massenprozent Pfeffer aufweist.

5. Gemüseaufstrich gemäß Anspruch 4, wobei der Massenanteil des Chilis zwischen 1 und 10 Massenprozent und/oder der Massenanteil des Pfeffers zwischen 1 und 10 Massenprozent liegt.

6. Gemüseaufstrich gemäß einem der Ansprüche 1 bis 5, wobei das Gemüse ausgewählt ist aus der Gruppe bestehend aus Wurzelgemüse, Blattgemüse, Fruchtgemüse, Sprossengemüse, Zwiebelgemüse, Hülsengemüse und Kohlgemüse.

7. Gemüseaufstrich gemäß einem der Ansprüche 1 bis 6,
wobei das Geliermittel Pektine und/oder Carrageene und/oder Agar-Agar und/oder Alginsäure und/oder Natriumalginat aufweist.

8. Verfahren zum Herstellen eines Gemüseaufstrichs, wobei das Verfahren aufweist:
Zubereiten eines Gemüsemuses;
Mischen des Gemüsemuses mit Essig, und Zucker zum Erzeugen einer Grundmasse des Gemüseaufstrichs;
Hinzufügen eines Geliermittels;
Erhitzen der mit dem Geliermittel versetzten Grundmasse.

9. Verfahren gemäß Anspruch 8, wobei beim Erzeugen der Grundmuses Chili und/oder Pfeffer und/oder Muskatnuss oder Muskatnussöl hinzugefügt werden.

10. Verfahren gemäß Anspruch 8 oder 9, wobei das Geliermittel vor dem Hinzufügen mit Zucker vermischt wird.
